# EUROPEAN PATENT APPLICATION

(11) **EP 0 549 236 A2**
(43) Date of publication of application: **30.06.1993**
(21) Application number: 92311428.4
(22) Date of filing: 15.12.1992
(51) Int. Cl.: G11B 7/12, G11B 7/135, G11B 21/21, G11B 11/10, G11B 5/58

(54) **Optical disk storage system and head apparatus therefor**

(30) Priority: 24.12.1991 US 814123
(71) Applicant: International Business Machines Corporation, Armonk, N.Y. 10504 (US)
(72) Inventor: Brezoczky, Blasius, San Jose, California 95120 (US); Seki, Hajime, San Jose, California 95120 (US)
(74) Representative: Burt, Roger James, Dr.

(57) **Abstract**

An optical storage system is described which utilizes the principles of optical stethoscopy to provide subwavelength resolving power thus allowing high areal bit density to be achieved. The optical head includes one or more optical elements (33) mounted on a slider (31) which is in physical, sliding contact with the recording medium (30). Optical elements couple a light beam to a submicron optical aperture (37) formed in the lower surface of the slider to be transmitted to the storage medium. The slider is fabricated from a crystalline material which has a non-linear load versus friction characteristic in the negative load region. When the head is in sliding contact with the recording medium surface, a restoring force is generated which maintains the optical head in physical contact with the recording medium overcoming any lifting forces generated by the moving air layer adjacent the recording medium surface. This restoring force also allows the head to be operated with a negative external load applied. Utilizing an optical head having the light transmission aperture formed in the slider in close proximity to the storage medium surface allows high density recording to be achieved without the requirement of an electro-mechanical servo system to provide beam focusing for the system.

## Description

The present invention relates generally to optical disk storage systems and optical head apparatus therefor.

In magnetic storage systems, an information bit is stored by focusing a magnetic field to a small volume on the disk to align the magnetic domains in that volume to a desired orientation. In optical storage systems, an information bit is stored by focusing a laser beam onto a small spot on the optical disk to heat the medium and thus effect a physical change in the medium material at that spot. In the case of magneto-optic storage systems, the heat generated by the laser beam causes the magnetic domains at the spot location to be aligned with an applied magnetic field. In all moving disk storage systems, the demand for increased storage capacity is presently being met by increasing the areal bit density on the storage disk.

In magnetic disk storage systems, increase of areal bit density requires the reduction of three basic parameters, the magnetic write transducer (head) gap length, the thickness of the magnetic storage media and the head to disk separation. Given a specified gap length and media thickness, the smaller the head-disk separation, i.e., the lower the head flying height, is, the smaller the bit cell size which can be achieved is. The limit of lower flying height is contact recording, in which the slider is in physical contact with the rotating magnetic disk, i.e., the slider is sliding or rubbing continuously on the disk surface and the read/write transducer is as close as the edge of the slider can be to the disk surface.

A typical prior art optical disk storage system comprises a fixed optical element and a movable optical element generally referred to as the optical head. The optical head includes such components as an objective lens, one or more mirrors, a focus actuator motor and a fine tracking actuator. The optical head is mounted in a carriage which rides on a pair of rails for radial motion across the disk. Typically, the carriage will provide mountings for coarse tracking .actuator coils and also include a set of wheels which engage the rails. The mass and size of the optical head and carriage combination are principal contributors to the relatively long access times encountered in optical disk drive systems.

In such an optical storage system, a laser beam is projected onto the optical storage medium (optical disk) and focused to a small spot on the disk surface through an optical transducer or head. In prior art optical systems, the optical head is maintained well above the medium surface and the beam spot size is defined by the laser light wavelength (λ) and conventional optics. It has been generally believed that the diffraction limit in air of about λ/1.5 is the fundamental lower bound in resolution for any optical image recording. Thus, the primary means of increasing areal bit density in an optical or magneto-optical system has traditionally been to utilize laser beams of shorter wavelength. The beam output of injection lasers presently in use have wavelengths on the order of 1 micrometer (µm). New lasers, use of second or higher order harmonics and frequency multipliers are currently being explored. However, considerable difficulty is being encountered and the likelihood of development of new lasers having suitable characteristics in the near future is low. On the other hand, there has been steady improvement in the reliability and power capabilities of the currently used conventional semiconductor lasers which is likely to continue due to their wide use.

It is known in the art that the diffraction limit for conventional optics may be circumvented by imaging a light beam through an extremely narrow aperture which is extremely close to a test object without the use of optical elements. For example, a doctor's stethoscope allows localization of the position of a patient's heart to within less than 10 cm by moving the stethoscope over the patient's chest and listening to the sound of the heart beat. Assuming a sound frequency of 300-100Hz corresponding to a wavelength of approximately 30m, the stethoscope provides a resolving power of approximately λ/1000. Applying the principles of the stethoscope, subwavelength resolution may be achieved for other types of waves at other wavelengths, with the smallest resolvable dimension being of the order of the aperture diameter or the aperture distance from the test object, whichever is larger.

The present invention seeks to overcome the disadvantages of prior optical data storage systems and accordingly provides, in one aspect, an optical head apparatus for use with an optical storage medium, comprising:
means for transmitting a light beam to an optical storage medium; and
support means maintained in physical contact with said optical storage medium, said transmitting means rigidly mounted on said support means in close proximity to a major surface of said optical storage medium.

In a preferred optical head apparatus, said transmitting means comprises an objeftive lens fixedly mounted on said support means for focusing said light beam onto an optical aperture formed in a bottom side of said support means, said bottom side in physical contact with said optical storage medium. Thus the present invention provides a practical use of optical stethoscopy.

In a second aspect of the invention there is provided an optical storage system comprising an optical storage medium comprising a rigid substrate having a layer of optical storage material thereon; an optical head apparatus as defined by the appended claims including an optical head and support means for supporting said optical head in substantially physical contact with said optical storage medium, said optical head comprising means for transmitting a light beam to said optical storage medium, said transmitting means mounted on a substrate of a material having a load versus friction characteristic that is nonlinear in the negative load region; and
means coupled to said optical storage medium for producing relative motion between said optical storage medium and said optical head up to a selected operating speed sufficient to generate a restoring force responsive to said load versus friction characteristics of said optical head substrate, said restoring force having a magnitude sufficient for maintaining said optical head in substantially physical contact with said optical storage medium at said selected operating speed, whereby data can be written or sensed without excessive wear to either said optical head or said optical storage medium.

The optical components of the optical head couple/focus a light beam at a submicroscopic optical aperture for transmission to an optical storage medium. The optical head is mounted on a slider suspended from a support arm such that the slider is maintained in physical contact with the moving optical storage medium (optical disk). Relative motion between the optical slider and the optical disk generates a tribo-attractive force which maintains a very steady average slider-disk separation, fluctuating within only several nanometers (nm) with respect to the disk surface. In a preferred storage system, the optical head and slider are constructed such that the optical aperture is disposed coplanar with the lower surface of the slider. Since the slider is in physical contact with the disk surface, the distance from the optical aperture to the storage medium is determined by the thickness of the transparent protective layers over the storage layer, i.e., the optical medium, of the optical disk and the slider average height above the disk surface due to surface asperity and disk runout.

In the present invention the slider is maintained at an essentially constant separation from the optical media with the same degree of accuracy with which the slider itself is maintained from the disk surface. Thus the requirement for a focusing servo system is eliminated. This allows the movable objective lens holder, focus actuator motor, focus servo controller and associated circuitry and other components to be eliminated from the system, resulting in a smaller, less massive optical head and a less complex system with fewer components. The end result is a much smaller, lighter optical slider having few optical components suspended from a linear or radial access arm. Both coarse and fine tracking actuator functions may be combined in a single access arm actuator, such as a voice coil motor, with all controller functions implemented in a single actuator controller.

The submicron diameter optical aperture disposed an extremely small distance from the storage medium provides high bit cell resolution, on the order of either the aperture diameter or the distance from the medium, and allows increased areal bit density over conventional optics to be achieved. Additionally, the elimination of the servo-mechanical systems for focusing greatly simplifies the system and reduces both the mass and size of the optical head. The smaller, less massive head reduces access time and makes feasible the stacking of optical disks to provide increased volume density.

The optical head slider can be fabricated from a number of different types of material including electrically non-conductive crystalline material (e.g. single crystal diamond or sapphire), electrically non-conductive polycrystalline material and electrically non-conductive amorphous material.

Preferred embodiments of the invention will now be described, by way of example only, with reference to the accompanying drawings, in which:
Fig. 1 is a perspective view of a contact slider supported on a rotating storage disk in accordance with the principles of the present invention;
Fig. 2 is a graphical diagram illustrating the frictional force versus external load on a selected slider as shown in Fig. 1;
Fig. 3 is a cross-sectional view of one preferred embodiment of the slider in accordance with the principles of the present invention;
Fig. 4 is a conceptual diagram in perspective of an optical storage system in accordance with the present invention;
Fig. 5 is a cross-sectional view of a preferred embodiment of a slider for use in a magneto-optical storage system as shown in Fig. 4;
Fig. 6 is a cross-sectional view of another preferred embodiment of the slider according to the principles of the present invention; and
Fig. 7 is a cross-sectional view of another preferred embodiment of the slider shown in Fig. 4.

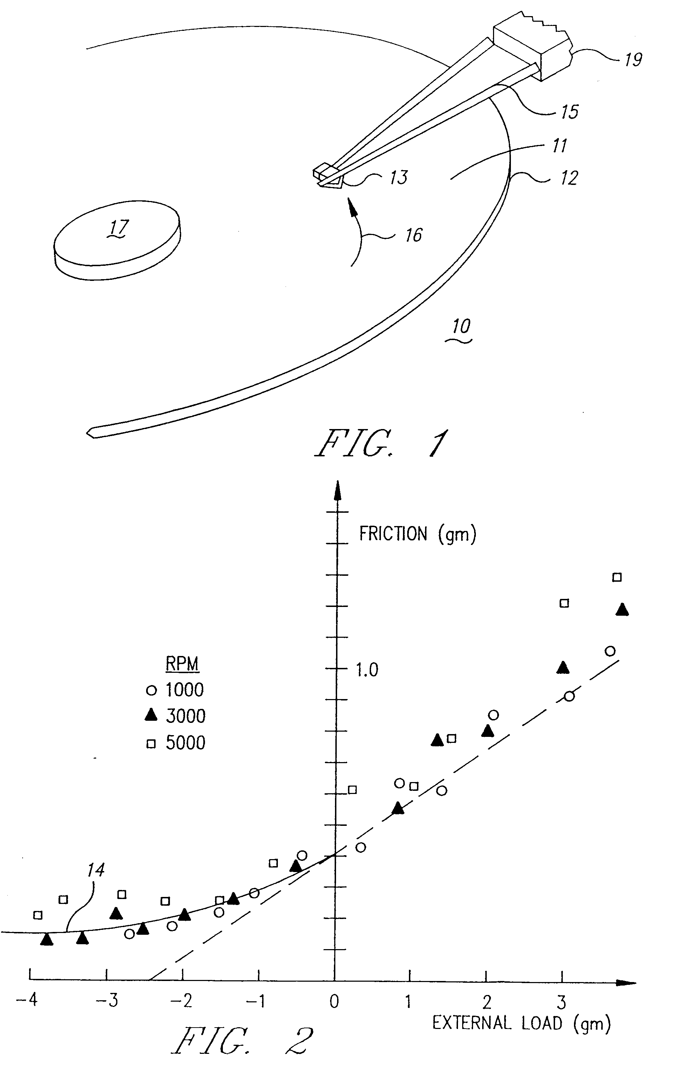

Referring now to Fig. 1, an information storage system comprising at least one rigid storage disk 12 fixedly supported on a spindle 17 and rotated by a disk drive motor (not shown). The recording medium 11 is deposited on the disk in a well-known manner in the form of an annular pattern of concentric data tracks, for example. The storage medium is covered by a protective layer such as a carbon or zirconia overcoat. At least one slider 13 is positioned in contact with the protective overcoat layer at the disk surface and supports one or more read/write heads. The slider 13 is attached to an actuator arm 19 by means of a suspension 15. The actuator arm 19 is attached to an accessing mechanism such as a voice coil motor (not shown) for positioning the read/write heads over desired data tracks. As the storage disk 12 rotates, the slider 13 is moved radially across the disk so that the read/write head may access different portions of the disk surface 11.

The slider 13 is positioned by the suspension arm 15 so that it is in contact with the recording medium at normal operating speed produced by relative motion between the slider 13 and the disk surface 11 in the direction indicated by arrow 16. The slider 13 remains in direct physical contact with the disk surface 11 even when the relative motion between the slider and disk surface exceeds speeds of 20 meters per second. Physical contact is maintained by an attractive force, referred to as a tribo-attractive force, that is of sufficient strength to overcome the lifting force created by the film of air which is moving with the disk surface which tends to force the slider away from the disk surface. U.S. Patent No. 4,819,091 discloses in detail a magnetic disk storage system incorporating a slider in physical contact with the storage medium.

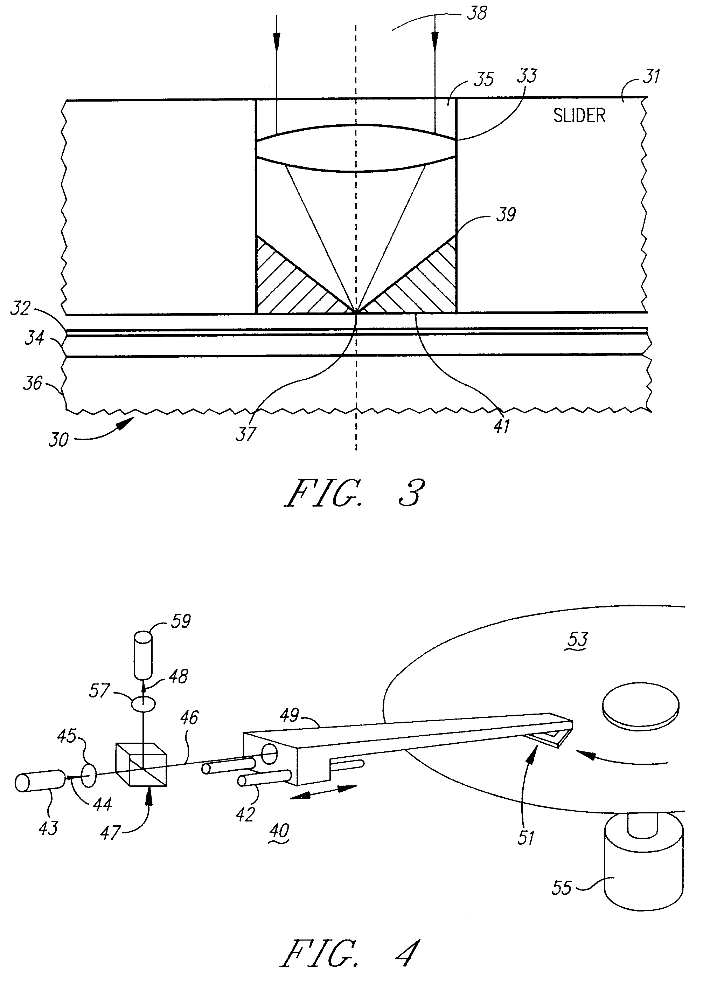

The tribo-attractive force is due to the columbic attraction between the tribo-electric charge generated as a result of relative motion between the slider and disk surfaces when in physical contact. The tribo-electric force is relatively independent of the disk speed above some threshold speed of the order of one meters per second but decreases below this speed. As the speed is reduced, there is a point at which the tribo-attractive force is no longer sufficient to maintain the slider in contact with the disk surface. This point of release appears to be a function of the disk runout and surface roughness. Additionally, as the suspension arm loading, i.e., the external load, on the slider 13 is decreased to a negative load, a "restoring force" is generated. That is, when the two surfaces are forced apart, the tribo-attractive force increases to counteract the force urging the two surfaces apart. This restoring force enables the slider 13 to be maintained in steady contact with the disk surface 11 in spite of the surface roughness and runout of the disk 12. As shown in Fig. 2, when the external load is positive, the actual load on the slider, i.e., the measured friction between the slider and disk surfaces, is linearly proportional to the external load on the slider 13 and there is an additional, constant tribo-attractive force. The net load at the slider-disk interface is the sum of these two forces. As the external load is reduced into the negative region, i.e., the slider is pulled up, away from the disk surface, the net load decreases, being the difference between the tribo-attractive force and the pull on the slider. As the magnitude of the negative external load on the slider 13 is increased, the net load at the slider disk interface decreases slowly as does the frictional force. The tribo-attractive force is a weak function of the disk speed above a minimum threshold speed. The restoring force effect and the small net load results in the slider stability and extremely low wear at the slider-disk interface observed in contact recording systems exploiting the tribo-attractive phenomenon. A tribo-attractive contact recording system is described in greater detail in the co-pending U.S. Patent Application Serial No. 07/814,124, entitled "Tribo-Attractive Contact Data Storage System,".

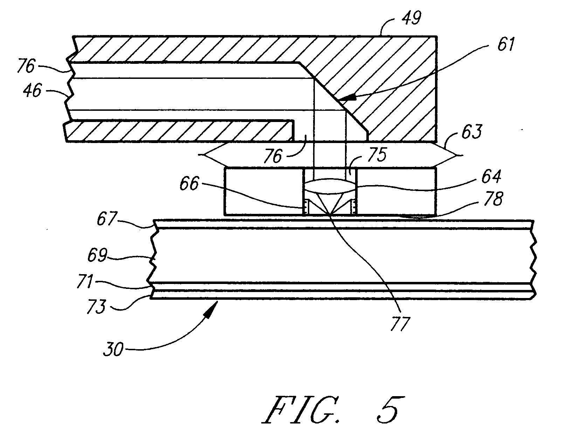

Referring now to Fig. 3, an optical slider 31 comprises an objective lens 33 mounted in a cone-shaped aperture 35 formed in a crystalline slider 31. The slider 31 is maintained in physical contact with the surface of an optical disk 30. Suitable slider materials exhibiting the described tribo-attractive characteristics may generally be selected from a range of crystalline and amorphous materials having a low coefficient of friction and which are electrically non-conductive. While materials also exhibiting a high thermal conductivity are preferred, a high thermal conductivity does not appear to be required in all materials which exhibit the tribo-attractive effect. For example, the slider 31 may be formed of a single crystal sapphire or diamond. The objective lens 33 focuses a received light beam 38 to a submicroscopic optical aperture 37 formed in the lower surface 41 of the slider at the apex of the cone-shaped aperture 35. The required optical aperture 37 diameter is a function of the beam wavelength being used and the resolution desired, the diameter typically being in the range between 20nm to 100nm.

The optical disk 30 may have the structure of a substrate 36 with a thin film optical media 34 on the outer surface of the substrate. The outer or upper surface of the media layer 34 is coated with a hard, transparent and conducting protective overlayer 32 such as an amorphous carbon film or a zirconium oxide (ZrO₂). Thus, the distance separating the focusing optics mounted on the slider 31 is determined by the thickness of the protective overcoat layer 31 and the disk surface smoothness and runout, typically a small fraction of the wavelength of currently utilized semiconductor lasers, and maintain this position without the requirement of prior art electro mechanical servo mechanisms. Utilizing the smooth disk and slider surfaces and overcoat layer thickness obtainable with present-day technology, head-disk separation of 200 Angstroms or less can be achieved.

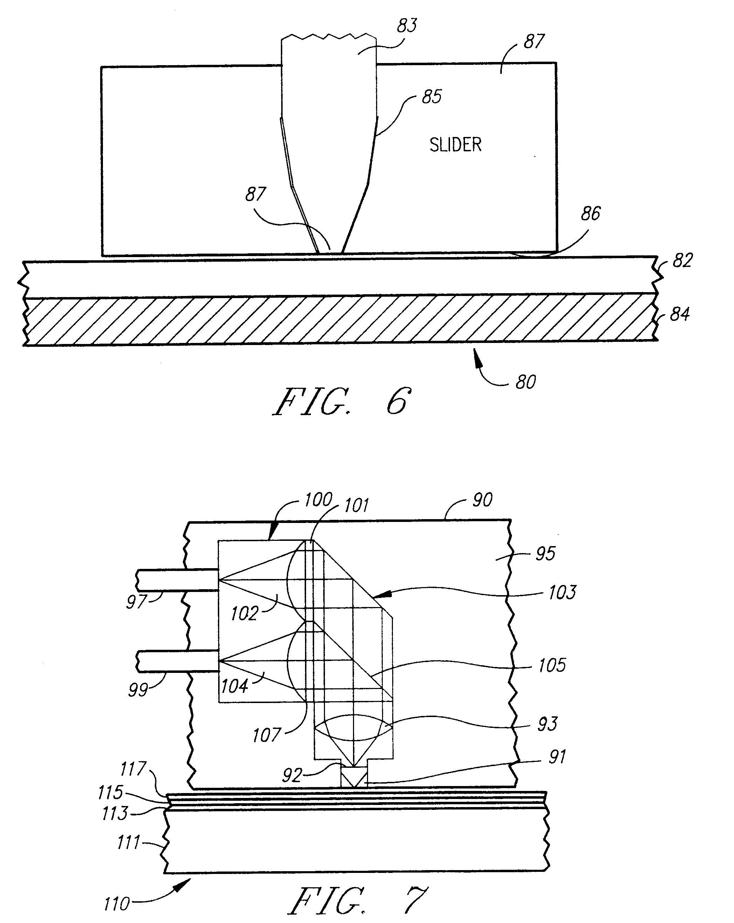

Referring to Fig. 4, an example of an information storage system implementing a tribo-attractive contact optical slider in an optical storage system is shown. The optical system 40 basically comprises a semiconductor laser source 43, including collimating optics, generating a collimated laser beam 44, beam polarizing means 45, a beam splitter 47, a rigid suspension arm 49 supporting an optical slider 51 in physical contact with the surface of a rotatable optical disk 53, and motor means 55 coupled to the optical disk 53. The reflected or return beam 48 is separated out at the beam splitter 47 and directed to a detector circuit 59 via beam analyzer means 57. The optical disk 53 has a conventional structure, as described above with reference to Fig. 3, comprising a transparent substrate layer with a thin film optical medium layer on the inner or lower surface with a reflective overcoat layer. The outside or upper surface of the transparent substrate layer is coated with a conducting hard protective overcoat layer which is grounded to bleed off the tribo-electric charge generated by the relative motion between the slider and the disk surfaces. The hard amorphous carbon film commonly used with commercially available thin film magnetic storage disks is sufficiently conducting and transparent at thicknesses of 30 nm or less for this purpose. Alternatively, optical disk 53 may comprise a magnetic-optic medium to provide a magneto-optic recording system with a suitably configured optic slider 51 (as described below with reference to Fig. 5).

The optical slider 51 is suspended from the support arm 49 by spring flexures (as shown in Fig. 5) such that the slider follows the disk surface vertically with surface roughness and disk runout. The spring flexure suspension system is designed to provide a negative external load on the slider 51. As shown in Fig. 2, the negative external loading on the slider allows the system to operate with minimum frictional loading between the slider 51 and the optical disk surface. Since a restoring force is also generated which exactly counter balances the negative loading on the slider, the magnitude of the frictional force between the slider and the optical disk is equal to the tribo-attractive force generated by the sliding contact between the slider and the optical disk surface. The rigid support arm 49 is mounted on rails 42 and is movable along the radius of the disk 53 such that the slider can access desirable disk tracks. The movement of the support arm 49 is coupled to an access mechanism (not shown), such as a voice coil motor, for example. The voice coil motor is a coil movable within a fixed magnetic field with the direction and velocity of the coil movement being controlled by optical head positioning circuitry (not shown). The optical slider 51 (as shown in Fig. 1) is shaped and mounted with respect to the disk motion to provide a "now plow" affect; i.e., the optical slider effectively pushes aside any dust particles on the disk surface, thus minimizing or eliminating the possibility of dust or other particles getting in between the objective lens and the disk surface.

Referring now to Fig. 5, an optical slider 51 suitable for use in a magneto-optic (MO) storage system comprises a slider 51 having the objective lens 64 and the magnetic coil 66 mounted internally, concentrically with the objective lens, in a cone-shaped aperture 75 extending vertically through the slider 51. As described above with reference to Fig. 3, the cone-shaped aperture 75 is terminated at its apex by an optical aperture 77 formed in the lower surface 78 of the slider 51. The slider 51 is suspended from support arm 49 by a flexure spring suspension 63. The slider 51 is positioned relative to support arm 49 such that the objective lens 64 is aligned with aperture 76 formed lengthwise in support arm 49. Laser beam 46 is directed along aperture 76 via mirror 61 and objective lens 64 to be focused at the optical aperture 77 for further transmission to the magneto-optic medium layer 71. Laser beam 46 comprises both the transmitted beam 44 and the return beam 48 reflected from reflection layer 73. Similarly, as described above, the magneto-optic disk 30 comprises a transparent substrate layer 69 having the magneto-optic media layer 71 with a reflective layer 73 on the inner or lower surface and a protective overcoat layer 67 in physical contact with the slider 51.

Referring now to Fig. 6, another preferred embodiment of an optical slider implementing the principles of optical stethoscopy is shown. An optical head comprises an optical fiber 83 having its tip suitably terminated to form an optical aperture 87 mounted on a contact slider 81. The slider 81 is maintained in physical contact with the surface of optical storage disk 80. The optical storage disk 80 comprises a storage medium layer 84 which may be either an optical storage medium or a magneto-optic storage medium and a transparent protective overcoat layer 82. Utilizing an optical disk having a protective overcoat layer 82 of approximately 50nm thick and assuming an average slider/disk separation due to surface asperities and disk runout of a few tens of nms, the optical aperture 87 to media distance can be maintained within 100nm.

Optical fiber 83 tapers uniformly from its nominal diameter to a tip having a flat end face 87 perpendicular to the fiber axis. The fiber side walls 85 are coated with an opaque material, such as aluminum (100-1000nm thick), leaving the flat end face as a transmissive aperture to form optical aperture 87. The tapered optical fiber may be fabricated by drawing a single mode optical fiber in a commercially available micropipette puller while heating it with a carbon dioxide laser. The tip size, i.e., the size of the optical aperture 87, can be adjusted from approximately 20nm to greater than 500nm in diameter.

The tapered optical fiber 83 is mounted on the slider 81 in such a manner that the optical aperture 83 is coplanar with the slider lower surface 86. This ensures that the optical aperture will be maintained at a constant minimum distance from the optical medium. Since the resolution obtainable is a function of the aperture size or the distance from the aperture to the medium, whichever is larger, the optical aperture 87 diameter is preferably smaller than the minimum distance separating the optical aperture from the optical medium 84. Thus, the minimum spot size achievable becomes a function of the overcoat layer 82 thickness and the disk surface smoothness and runout. Utilizing an optical aperture diameter of approximately 20-50 nm, a spot size of the order of 50 nm is obtainable. With a track density of 5000 tracks/inch, an areal bit density of approximately 2.5 gigabits/inch² can be obtained.

Referring now to Fig. 7, a composite optical slider 90 comprising an integrated optical head 100 mounted on or embedded in a contact slider 95 is shown. Optical fiber 97 couples the transmission beam 102 to the slider 91 for further coupling via polarizing means 101 and mirror 103 to the objective lens 93 for focusing at an optical aperture 91. The optical aperture 91 is formed in the lower surface of the slider 95 at the apex of a cone-shaped aperture 92 as described above with respect to Fig. 3. The reflected beam 104 is coupled via the objective lens 93, beam splitter 105, beam analyzer means 107 and optical fiber 99 to the detector circuitry (not shown). Utilizing optical fibers 97, 99 with integrated optical elements including the polarizing means 101, mirror 103, beam splitter 105 and beam analyzer 107 reduces the complexity of the optical apparatus and allows precise optical alignment with the objective lens 93 to be achieved. A suitable optical disk 110 comprises disk substrate 111 having a reflective layer 113, optical recording media layer 115 and protective overcoat layer 117 deposited thereon.

## Claims

1. An optical head apparatus for use with an optical storage medium, comprising:
means for transmitting a light beam to an optical storage medium; and
support means maintained in physical contact with said optical storage medium, said transmitting means rigidly mounted on said support means in close proximity to a major surface of said optical storage medium.

2. An optical head apparatus as in claim 1 wherein said support means comprises a contact slider fabricated from a material which has a non-linear load versus friction characteristic in the negative load region.

3. An optical head apparatus as in claim 1 or claim 2 wherein said transmitting means comprises an objective lens fixedly mounted on said support means for focusing said light beam onto an optical aperture formed in a bottom side of said support means, said bottom side in physical contact with said optical storage medium.

4. An optical head apparatus as in claim 3 wherein said optical aperture is formed at the apex of a cone-shaped aperture formed in said support means, said objective lens being mounted in said cone-shaped aperture in spaced relationship with said optical aperture.

5. An optical head apparatus as in claim 4 wherein said bottom side comprises a flat side of said support means, said flat side parallel to and in contact with said optical storage medium major surface, the longitudinal axis of said cone-shaped aperture being normal to said support means flat side.

6. An optical head apparatus as in claim 1 or claim 2 wherein said transmitting means comprises optical fiber means mounted on said support means for transmitting said light beam to selected positions or said optical storage medium, said optical fiber means terminating in an optical aperture formed therein.

7. An optical head apparatus as in claim 6 wherein said optical fiber means comprises an optical fiber uniformly tapering to a terminating tip, said tip having a flat face perpendicular to the optical fiber longitudinal axis, said flat face forming said optical aperture.

8. An optical head as in claim 6 or claim 7 wherein said optical aperture has a diameter in the range of 20 to 50 nanometers.

9. An optical head as in claim 7 or claim 8 wherein the side walls of said tapered optical fiber are coated with a layer of opaque material.

10. An optical head as in claim 9 wherein said opaque material is chromium, aluminum or silver.

11. An optical head apparatus as in any of claims 7 to 10 wherein said support means has a flat side, said flat side parallel to and in physical contact with said optical storage medium major surface, said optical fiber flat face being substantially coplanar with said support means flat side.

12. An optical head apparatus as in any preceding claim further comprising magnetic means for generating a magnetic field, said magnetic means being rigidly mounted on said support means.

13. An optical head apparatus as in claim 12 wherein said magnetic means comprises a magnetic coil mounted concentrically with said transmitting means.

14. An optical head apparatus as in any preceding claim further comprising optical means for receiving said light beam and directing said light beam to and from said transmitting means, said optical means rigidly mounted on said support means.

15. An optical head apparatus as in claim 14 wherein said optical means comprises mirror means for redirecting a received light beam.

16. An optical head apparatus as in claim 14 wherein said optical means comprises:
mirror means for redirecting a transmitted light beam to said transmitting means; and
beam splitter means for redirecting a return light beam received from said transmitting means.

17. An optical head apparatus as in claim 16 wherein said optical means further includes polarizing means for polarizing said transmitted light beam in a desired orientation and beam analyzer means for receiving and analyzing said return beam.

18. An optical recording head apparatus as in claim 17 wherein said optical means comprises an optical unit including selected integrated optical elements.

19. An optical head apparatus as in claim 14 further comprising optical fiber means for coupling said light beam to and from said optical means.

20. An optical disk storage system comprising:
an optical storage medium comprising a rigid substrate having a layer of optical storage material thereon;
an optical head apparatus as claimed in any preceding claim including an optical head and support means for supporting said optical head in substantially physical contact with said optical storage medium, said optical head comprising means for transmitting a light beam to said optical storage medium, said transmitting means mounted on a substrate of a material having a load versus friction characteristic that is nonlinear in the negative load region; and
means coupled to said optical storage medium for producing relative motion between said optical storage medium and said optical head up to a selected operating speed sufficient to generate a restoring force responsive to said load versus friction characteristics of said optical head substrate, said restoring force having a magnitude sufficient for maintaining said optical head in substantially physical contact with said optical storage medium at said selected operating speed, whereby data can be written or sensed without excessive wear to either said optical head or said optical storage medium.

21. An optical disk storage system as in claim 20 wherein said support means comprises a rigid access arm and spring means for suspending said optical head, said spring means providing a predetermined external load on said optical head.

22. An optical disk storage system as in claim 21 wherein said spring means includes means for providing a negative external load when said optical head is in physical contact with said optical storage medium moving relative to said optical head at said selected operating speed.

23. An optical disk storage system as in claim 22 wherein said rigid access arm comprises a linear access arm for linear movement along a radius of said optical recording medium.
